(19) Europäisches Patentamt
European Patent Office
Office européen des brevets

(11) **EP 2 809 039 A1**

(12) **EUROPEAN PATENT APPLICATION**

(43) Date of publication:
**03.12.2014 Bulletin 2014/49**

(51) Int Cl.:
*H04L 25/02* (2006.01)    *H04L 25/03* (2006.01)
*H04L 27/26* (2006.01)

(21) Application number: **13290117.4**

(22) Date of filing: **27.05.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **ALCATEL LUCENT**
**92100 Boulogne-Billancourt (FR)**

(72) Inventor: **Gacanin, Haris**
**2018 Antwerp (BE)**

(74) Representative: **Plas, Axel Ivo Michel**
**IP HILLS NV**
**Hubert Frère-Orbanlaan 329**
**9000 Gent (BE)**

(54) **Method and device for improving a home network making use of an adaptive guard interval**

(57) The invention concerns an improved method of operating an OFDM transmitter (1) configured to transmit an OFDM signal comprising at least Nk subcarriers comprising pilot signals P(k) to a plurality of connected OFDM receivers (2A, 2B). Said receivers (2A, 2B) and said transmitter (1) being connected to a control system (4) configured to calculate an adapted group guard interval length $N_g^{opt}$.

Fig. 5

**Description**

**Field of the Invention**

The present invention generally relates to the field of methods and devices for improving the throughput, quality, stability and performance of home network infrastructure, particularly in a network in which a transmitter provides a signal to a plurality of receivers.

**Background of the Invention**

Residential internet connectivity traditionally consists of single voice-band modem, a Digital Subscriber Line or DSL modem, or a coax-cable modem, connected to a computer in the house. With the arrival of new applications and technologies, such as digital television, on-line gaming and home automation, the Internet access needs to be extended to various types of home devices, such as a set-top box, a game console, a home automation system, plural desktops or laptops, etc. All those home devices are then typically interconnected by means of a home network, which need to be set up and configured. A home network typically accesses the Internet via a home network gateway or residential gateway, which is connected to an access network via a traditional DSL modem or coax-cable modem. The interconnectivity between two devices in the home network itself is based on, typically already existing, in-house media such as twisted pair phone wires, electrical power wires, coax-cables and/or wireless technologies like WiFi.

Most of the time, the in-house available media typically suffers from a low quality physical layer offering poor immunity for interference in-house. Twisted pair phone wires are usually slightly twisted. Electrical power wires typically consist of low category cable that is not twisted at all. As a result, these existing media are usually sensitive to various kinds of noise. Further also the usable spectrum of such a home network is limited by the characteristics of the medium and structure of the network.

Some telecommunication standards, such as for example ITU G.hn, specify a single Physical Layer based on fast Fourier transform (FFT) orthogonal frequency-division multiplexing (OFDM) modulation and low-density parity-check code (LDPC) forward error correction (FEC) code. OFDM systems split the transmitted signal into multiple orthogonal sub-carriers, which allows the use of a guard interval (GI) in order to avoid inter symbol interference (ISI) in a multipath network environment such as a home network. In a multipath network environment the transmitted signals reach the receiver by two or more electromagnetic paths, for example caused by reflection. The receiver then receives the transmitted signal as a plurality of signals, each with a specific delay. A multipath network environment can exist in wireless networks, but can equally exist in wired media, for example in power line communication in which a plurality of parallel wiring paths are present and impedance mismatches cause signal reflections. These issues also arise in other communication mediums such as for example copper twisted pairs, coax. This could lead to the risk that the delayed signals of a received OFDM symbol would overlap with the signals of the next OFDM symbol. In order to avoid this risk, the transmitter inserts a GI at the beginning of the OFDM symbol. In some telecommunication standards, such as for example ITU G.hn, different sizes of GI are available. A specific GI length is chosen by the transmitter depending on the transmission modulation and coding scheme to cope with the specific multipath network environment. Usually a cyclically extended part of the OFDM, generally referred to as a cyclic prefix, is inserted into the GI. Furthermore the use of pilot signals, which are known symbols that are inserted into the signal at regular intervals and pilot carriers that continuously broadcast a reference signal, allows for time and frequency synchronization and channel estimation at the receiver end.

The GI length set by the transmitter is chosen to be able to cope with a predetermined multi-path network environment. GI length is set so that delayed signals, that were caused by a plurality of electromagnetic paths or channel multi-paths between transmitter and receiver, have a period that is smaller than the period of the GI. However in the context of a home network the characteristics of the multipath network environment might change considerably over time, for example in the case of a home network comprising power wires when devices are switched on or off or are plugged in or out of the power sockets or even during power fluctuations during operation of certain devices. The GI length chosen by the transmitter then risks being inadequately set for the current conditions.

An OFDM system with adaptive guard interval length is known from the publication Zhang Zhao-yang, Lai Li-feng, 2003, "A novel OFDM transmission scheme with length-adaptive Cyclic Prefix", Journal of Zhejiang University SCIENCE. The adapted guard interval is calculated during channel estimation as the double of the RMS delay spread estimation. Although this leads to a system with impact on the GI length at the side of the transmitter leading to an improved throughput, the impact of noise at the side of the receiver is not reduced during the channel estimation process which limits the possibilities to improve the average BER.

An improved OFDM system with adaptive guard interval length was described in a co-pending patent application EP12290336.2. This system an improved method and system with adaptive guard interval length that is able to cope with changes in a home network environment more efficiently such that the average BER can be reduced without compromising the risk for inter-symbol interference. This system was able to optimize transmission by means of calculation of an adaptive guard interval for a specific receiver transmitter pair, generally referred to as unicast communication. However there still exists a need to efficiently provide an adaptive guard interval in the context of multicast or broadcast communication in which a transmitter provides a signal to a plurality of receivers. In such a context there exist an plurality of network links or channels between the transmitter and the plurality of receivers of which the number corresponds to the number of receivers. Each of the network links may comprise a different delay spread and may be affected by the channel impairments differently. When applying the solution presented in co-pending patent application EP12290336.2 this could result in the calculation of different adaptive guard interval lengths for each of the plurality of receivers. This is further complicated when the plurality of receivers are running different services requiring for example different data rates, such as for example a receiver requiring a HDTV signal with a data rate of 25 Mbps, another receiver requiring an audio conference signal with a data rate of 3 - 10 Mbps and still a further receiver requiring a signal suitable for email transmission requiring a data rate as low 500 Kbps.

There thus still remains the problem of how to efficiently select the most suitable adaptive guard interval in such a multicast or broadcast context comprising a transmitter serving a plurality of receivers for which a plurality of different adaptive guard intervals could be calculated.

**Summary of the Invention**

According to a first aspect of the invention there is provided a method of operating an OFDM transmitter configured to transmit an OFDM signal comprising at least Nk subcarriers comprising pilot signals P(k) to a plurality of connected OFDM receivers, said OFDM receivers and said OFDM transmitter further being connected to a control system configured to calculate an adapted guard interval length Ng', and each of said plurality of OFDM receivers comprising a Channel Estimator configured to extract estimated channel information $H_e(k)$ from the pilot signals P(k) of the received OFDM signal by means of a windowing function, k being a subcarrier index and ranging from 0 to Nk-1 in integer increments,

the method comprising the steps of, for each of said plurality of OFDM receivers:

- the Channel Estimator extracting said estimated channel information He(k) by means of a windowing function with a window size equal to the guard interval length Ng,

- the Channel Estimator extracting a plurality of further estimated channel informations $H_e^{(\alpha)}(k)$ by repeating said windowing function a plurality of times with a non-zero window size equal to the guard interval length Ng minus a filtering parameter $\alpha$, said filtering parameter $\alpha$ being selected from a corresponding plurality of values in the range from -Ng to Ng,.

- the control system calculating for each of said plurality of further estimated channel informations $H_e^{(\alpha)}(k)$:

  - an estimator $MSE(\alpha)$ that quantifies the difference between said estimated channel information $H_e(k)$ with a window size equal to said guard interval length Ng, and said further estimated channel information $H_e^{(\alpha)}(k)$ with said non-zero window size equal to said guard interval length Ng minus said filtering parameter $\alpha$.

  - a ratio $B(\alpha)$ between a current estimator $MSE(\alpha)$ for said filtering parameter $\alpha$ of the corresponding further estimated channel information $H_e^{(\alpha)}(k)$ and a next estimator of another of said plurality of further estimated channel informations;
  - an optimal $\alpha$ in function of said filtering parameter $\alpha$ for which said ratio $B(\alpha)$ reaches an extremum;
  - an adapted guard interval length Ng' = Ng - optimal $\alpha$;

- the control system providing a plurality of respectively calculated adapted guard interval length Ng' for each of the plurality of OFDM receivers to the control system;

- the control system calculating an adapted group guard interval length $N_g^{opt}$ by means of a selection function in function of the plurality of respectively calculated adapted guard interval length Ng'.

This way of calculating an adapted group guard interval length allows also in a multicast or broadcast context for an improved bit error rate when coping with variations in the channel. This allows to adaptively cope with deteriorating channel conditions with an increased number of multi-paths as well as improving channel conditions with a decreased number of multi-paths, even in a situation in which for each of the plurality of receivers there is initially calculated a different adapted guard interval length.

According to a preferred embodiment the control system calculates an adapted group guard interval length $N_g^{opt}$ by means of said selection function which selects said adapted group guard interval length $N_g^{opt}$ in function of a plurality of priority values S associated with each OFDM receiver.

In this way an efficient and robust communication for higher priority communication services will not be negatively affected in an unacceptable way when changes occur to a lower priority communication service.

According to a further embodiment the control system calculates the plurality of priority values in function of the required data rate of each OFDM receiver.

This would for example allow to let receivers that require a high data rate signal have a higher priority impact on the selection of the adapted group guard interval length $N_g^{opt}$ then for example receivers that require only a lower data rate signal.

According to an alternative embodiment the control system (4) calculates an adapted group guard interval length $N_g^{opt}$ by means of said selection function which selects said adapted group guard interval length in function of error probabilities Pe associated with each OFDM receiver.

Taking into account these error probabilities allows to make a balanced selection of the adapted group guard interval $N_g^{opt}$ that provides for the most efficient and qualitative adaptive multicast or broadcast communication setup when taking into account all receivers involved.

Optionally the control system calculates said error probability Pe associated with an OFDM receiver in function of their respectively calculated adapted guard interval length Ng'.

This allows to calculate the error probability by means of data available from the calculation of the adapted guard interval length of each receiver, thus simplifying the calculation of a selection of the adapted group guard interval length $N_g^{opt}$ by reusing previously calculated values.

According to a particular embodiment the control system calculates said error probability Pe associated with an OFDM receiver in function of

$$\frac{1}{2}\left( \frac{1}{\sqrt{2\left(\frac{1+\alpha_c^{-(l_m+1)}}{1+\alpha_c^{-L}}\right)^{-1}\left(1+\frac{SNR^{-1}}{2}\right)\left[1+\left(\frac{1+\alpha_c^{-(l_m+1)}}{1+\alpha_c^{-L}}\right)^{-1}\frac{SNR^{-1}}{2}\frac{X}{N_k}\right]}-1} \right)$$

in which:

- X = Ng';

- $l_m = \underset{l}{\arg\max}\{\tau_l < N_g\}$, where $\tau_l$ is the I-th reflection between the OFDM receiver and OFDM transmitter; and

it is assumed that $E[|h_l|^2] = \frac{1+\alpha_c}{1+\alpha_c^{-L}}\alpha_c^{-l}$ where $E[|h_l|^2]$ is the expectation of channel gains, L is the maximum channel delay and $\alpha_c$ is the channel decay coefficient.

This allows for an efficient calculation of the error probability values.

According to a specific embodiment said filtering parameter $\alpha$ is an integer in the range from -(Ng-1) to (Ng-1), optionally in the range from 0 to Ng-1.

This allows for an efficient digital implementation and optionally allows for an efficient calculation with a focus on improving channel conditions, which is especially useful if the initial window size is chosen conservatively.

According to a further embodiment the control system calculates said estimator $MSE(\alpha)$ such that it quantifies said difference by means of a mean square error.

In this way a reliable and robust estimator is implemented, which can be calculated efficiently.

According to an optional embodiment the control system calculates said estimator

$$MSE(\alpha) = \sum_{k=0}^{Nk-1} \left| H_e^{(\alpha)}(k) - H_e(k) \right|,$$ which allows for an efficient digital calculation.

According to a specific embodiment the control system calculates said another of said plurality of further estimated channel informations of said next estimator such that it is one of which the filtering parameter $\alpha$ is a higher step value of said range of said plurality of values for said plurality of filtering parameters $\alpha$ with respect to the filtering parameter $\alpha$ of the current estimator. Optionally said estimator $B(\alpha) = \left| \dfrac{MSE(\alpha+1)}{MSE(\alpha)} \right|.$

According to a further embodiment the control system calculates said optimal $\alpha$ in function of argmax

$$\operatorname*{argmax}_{\alpha}\{B(\alpha)\}.$$

According to a further embodiment the control system provides said adapted group guard interval length $N_g^{opt}$ to said OFDM transmitter and said plurality of OFDM receivers.

Such a setup allows for an automated system.

According to still a further embodiment said OFDM transmitter and said OFDM receiver adapts said guard interval length Ng for future transmissions to said adapted group guard interval length $N_g^{opt}$.

In this way an adaptive communication setup is created.

According to a second aspect of the invention there is provided a control system configured to perform the method according to the first aspect of the invention.

According to a third aspect of the invention there is provided an OFDM receiver configured to perform the method according to the first aspect of the invention.

According to an embodiment said receiver at least partly comprises said control system.

This offers the advantage that the path from the control system to the receiver that comprises the information needed for its operation is short and the calculations can thus be performed efficiently.

According to a fourth aspect of the invention there is provided an OFDM transmitter configured to perform the method according to the first aspect of the invention.

According to an embodiment said transmitter at least partly comprises said control system.

This offers the advantage that processing can be done at least partly at the transmitter while the plurality of receivers for example only needs to provide the required information. In some of the transmission schemes equalisation is preferred at the transmitter side in order to concentrate processing at this end in order to enable a reduced complexity at the receiver side.

According to a fifth aspect of the invention there is provided a computer program product adapted to perform the method according to the first aspect of the invention.

According to a sixth aspect of the invention there is provided a computer readable storage device encoding a machine-executable computer program according to the fourth aspect of the invention.

## Brief Description of the Drawings

Fig. 1A and 1B schematically illustrate insertion of the Guard Interval during OFDM baseband generation in the transmitter;

Fig. 2A and 2B schematically illustrates a TDM and FDM pilot signal scheme;

Fig. 3 schematically illustrates a Channel Estimator comprising a windowing function;

Fig. 4 illustrates an adaptive windowing function;

Figure 5 shows the search algorithm for computing the optimal $\alpha$;

Figure 6 shows the setup of the transmitter and the plurality of receivers taking part in a multicast or broadcast communication in order to allow an automated system;

Figure 7 illustrates the B calculation during the search algorithm;

Figure 8 shows the impact on the Bit Error Rate for a TDM and FDM pilot scheme;

Figure 9 shows the impact of the number of multi-paths in the channel and the level of parameter estimation accuracy;

Figure 10 shows the operating method for a multicast or broadcast context making use of the search algorithm shown in Figure 5;

Figure 11 illustrates the B calculation similar to Figure 7 during the search algorithm in the context of a multicast or broadcast communication; and

Figure 12 schematically shows a graphical representation of the calculations during the operating method of Figure 10.

## Detailed Description of Embodiment(s)

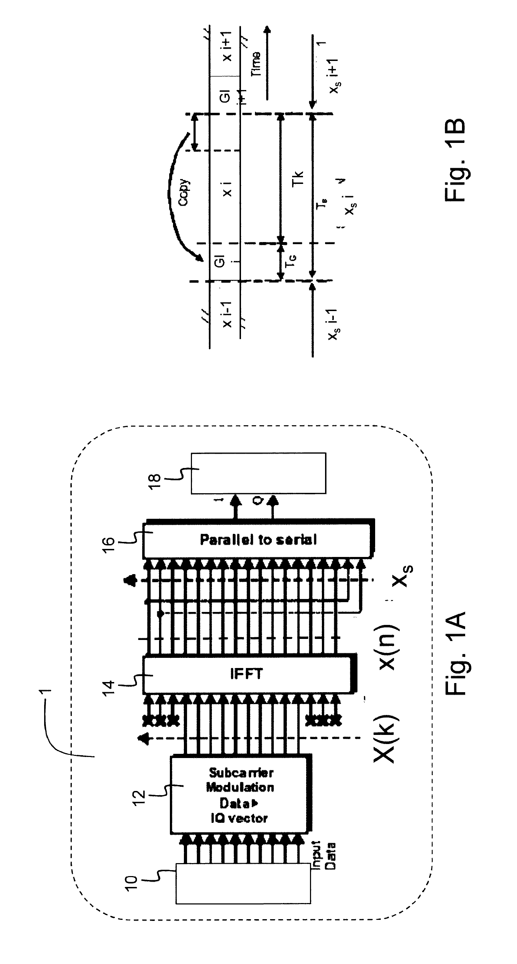

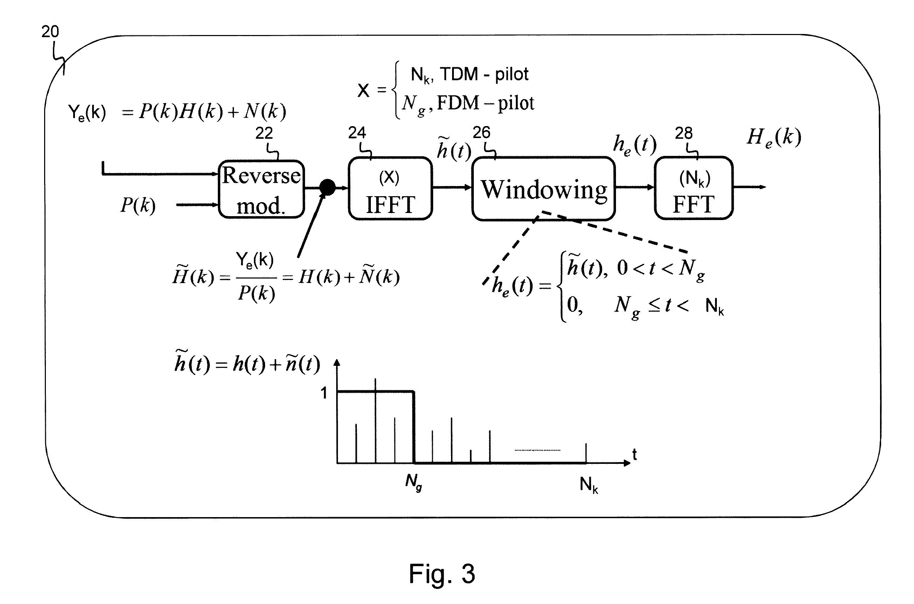

Figure 1 schematically shows a part of the baseband signal 18 generator of an OFDM transmitter 1. The resulting baseband signal is then used to modulate a carrier frequency. Binary input data 10 is fed to a subcarrier modulator 12 that maps groups of binary input data onto Into In phase (I) and Quadrature (Q) symbols which can be used to modulate the phase and the amplitude of a plurality of sub-carriers of the OFDM signal. These sub-carriers are provided as a plurality of parallel signal channels at predetermined frequencies, typically spaced apart by a predetermined frequency difference in function of the respective bandwidth of the sub-carriers. Known examples of modulation are for example Quadrature Phase Shift Keying (QSPK), 16 Quadrature Amplitude Modulation (QAM-16), QAM-64, Differential Quadrature Phase Shift Keying (DQPSK), ... , which each map a plurality of bits in the form of a symbol onto such a sub-carrier. The subcarrier modulator 12 also takes care of insertion of pilot symbols, which will be explained with respect to Figure 3. This creates a modulation data sequence $\{X(k)\}$, where k denotes the subcarrier index and with a length of Nk, which is fed to an Inverse Fourier Transformator 14 (IFFT) which transforms the modulation data sequence $\{X(k)\}$ into a time domain signal $\{x(n)\}$ with the following equation: $x(n) = IDFT\{X(k)\}$, n=0, 1, 2, ..., Nk - 1. Subsequently the GI is inserted, as shown in Figure 1A and 1B, as the cyclically extended part of the OFDM symbol. This means that a predetermined number (Ng) of samples at the end of the time domain signal $\{x(n)\}$ are added to in front of this signal to create the OFDM symbol $x_f(n)$ with the following equation:

$$x_f = \begin{cases} x(Nk + n), & n = -Ng, -Ng + 1, ..., -1 \\ x(n), & n = 0, 1, ..., Nk - 1 \end{cases}$$

Ng determines the length of the GI and as explained above is chosen to be larger than the expected delay spread caused by the multipath network environment to prevent inter-symbol interference. By inserting the cyclically extended part of the time domain signal $\{x(n)\}$ into the GI the risk of inter-carrier interference is reduced. A parallel to serial convertor 16 finalizes the generation of the baseband signal 18. As shown in Figure 1B in this way the OFDM transmitter 1 generates a sequence of OFDM symbols $x_f(n)$ with a period Ts comprising the sequence of Ng samples of the GI during a period Tg and the Nk samples of the sequence of Nf = (Ng + Nk) samples the time domain signal x(n) during a period Tk. In the examples given below the following values will be used for the parameters mentioned below Ng = 16, Nk =256, Nf = Ng + Nk = 16 + 256 = 272. It is clear that other suitable values could be chosen and that typically Nf is about 2000 - 4000 and corresponds to the number of subcarriers being used for transmitting the OFDM signal. It is clear that the enumerators k and n as used above can thus also be referred to as a subcarrier index or subcarrier enumerator. It is further clear that the length of the guard interval Ng could also be referred to as the length of the cyclically extended part of the time domain signal in the GI, also referred to as the cyclic prefix.

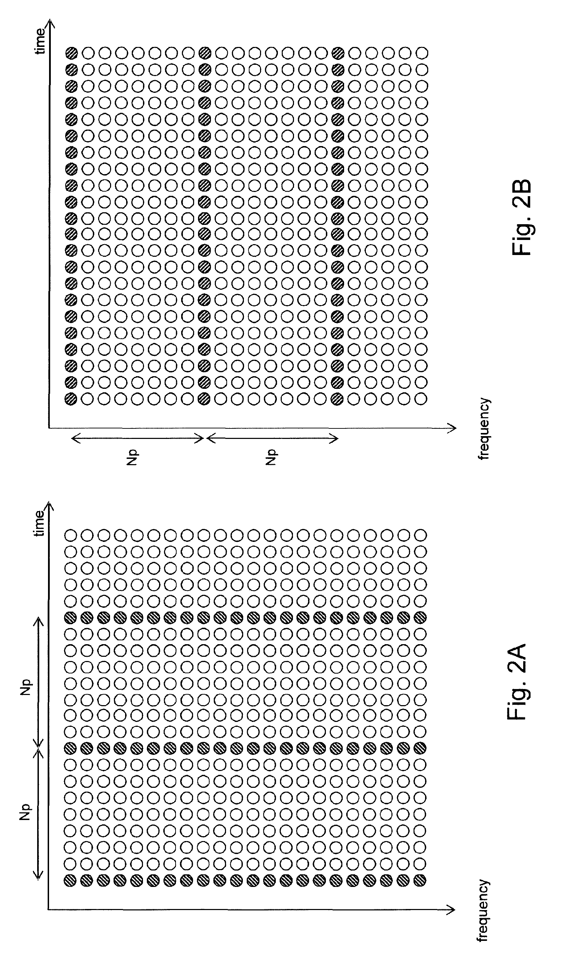

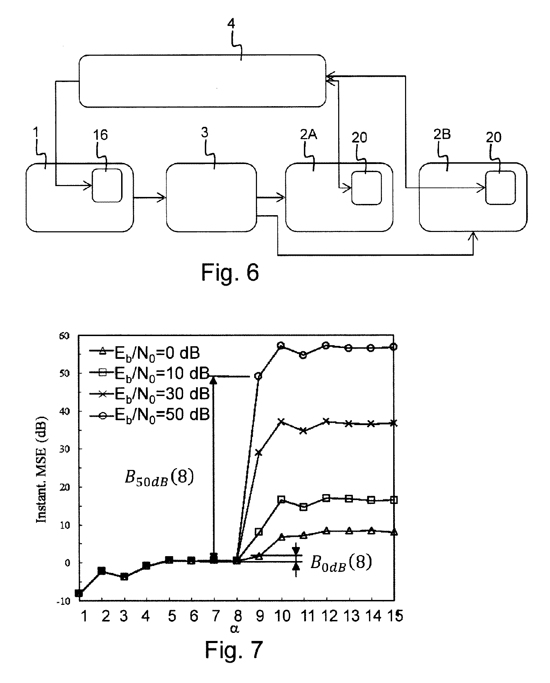

In a multicast or broadcast context the OFDM Transmitter 1 will insert pilot signals in order to allow reliable channel estimation by each of the plurality of OFDM receivers 2A, 2B, so that for example frequency selective fading or phase changes can be coped with efficiently. The OFDM transmitter 1 and plurality of OFDM receivers 2A, 2B are taking part in a multicast or broadcast communication in which the transmitter 1 sends a signal to this plurality of receivers 2A, 2B, as shown in Figure 6. There are two main types of Channel Estimation know. The first one is based on time domain multiplexed (TDM) pilot signals in which the transmitter 1 inserts at regular intervals, every Np OFDM symbols, a known Pilot signal on all the subcarriers as shown in Figure 2A. The second one is based on frequency domain multiplexed (FDM) pilot signals in which the transmitter 1 inserts for every OFDM symbol on a predetermined number of subcarriers a known pilot signal, for example every Np subcarriers as shown in Figure 2B. Typically a suitable combination of TDM and FDM pilot signals are used by the transmitter 1. For the purpose of example in this description Np will be chosen to be 16, which means that every 1/16 OFDM symbols comprises a pilot signal on all subcarriers and that every 1/16 subcarriers constantly transmits a pilot signal.

The plurality of OFDM receivers 2A, 2B will each receive the multicast or broadcast signal sent by the transmitter 1 and will each demodulate it from the carrier frequency in order to produce an OFDM baseband signal from which the OFDM symbols can be extracted as $y_s(n) = x_i(n) \otimes h(n) + n(n)$, with n = -Ng, -Ng+1, ... , - 1, 0, 1, ..., Nk -1, and where h(n) is the channel impulse response of the respective channel 3 between the transmitter 1 and the respective receivers 2A, 2B and n(n) is the noise added to signal during transmission in the respective channel 3 between the transmitter 1 and the respective receivers 2A, 2B. Each receiver will remove the GI from the baseband signal in order to produce a received time domain signal $y(n) = y_i(n + Ng)$, n = 0,1, ... , Nk - 1 subsequently the received time domain signal $y(n)$ is sent to a Fourier Transformator in order to produce a received modulation data sequence Y(k)= FFT(y(n)), k = 0, 1, ..., Nk-1, with a length of Nk. Assuming there is no ICI or ISI the received modulation data Y(k) = X(k)H(k)+N(k), where H(k) = FFT(h(n)) and N(k)=FFT(n(n)). After this operation each OFDM receiver 2A, 2B will extract the pilot signals $Y_e(k)$ = P(k) . $H_e(k)$+N(k) and provide them to a Channel Estimator 20 in order to determine the respective estimated channel information $H_e(k)$ = $Y_e(k)$ / P(k) for each of the OFDM receivers 2A, 2B. As the transmitted pilot signal P(k) is known $H_e(k)$ can be easily determined from $Y_e(k)$. The respective estimated channel information $H_e(k)$ is then used to adjust demodulation of the received OFDM symbols at the respective OFDM receivers 2A, 2B.

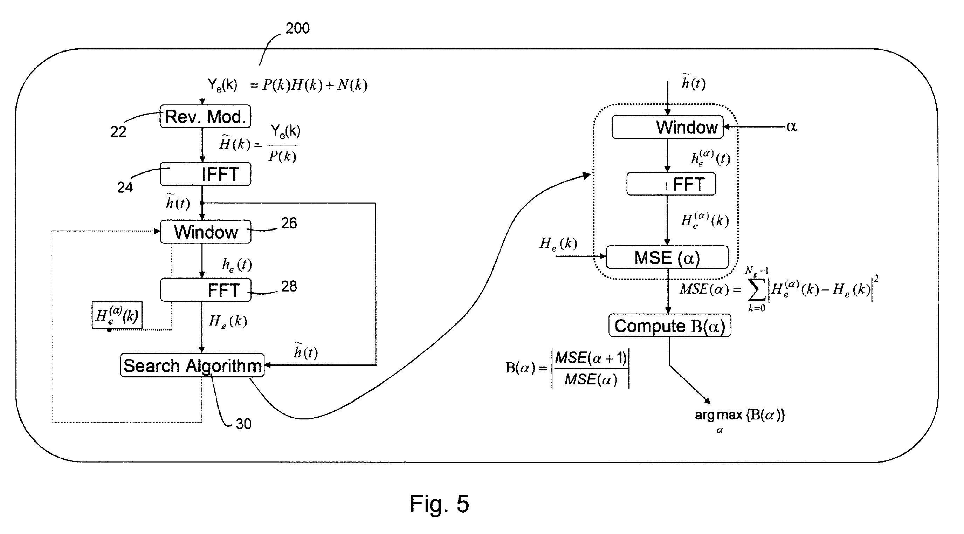

Figure 3 schematically shows the operation of a Channel Estimator 20 (CE) comprising a windowing function of the respective receiver 2A, 2B. As shown in Figure 6, it is clear that each of the receivers 2A, 2B taking part in the multicast or broadcast communication comprises such a Channel Estimator 20. As explained above, and further shown in the method of operation 200 of Figure 5, in order to determine the estimated channel information $H_e(k)$ in a first step 22 the received pilot signals are reverse modulated. Subsequently an Inverse Fourier Transform is applied at step 24. The Inverse Fourier Transform (IFFT) is applied to the X subcarriers of the pilot signals. In the case of TDM pilot signals this means that X is equal to Nk and in the case of FDM pilot signals X is equal to Ng. Subsequently the Channel Estimator 20 applies a windowing function to the resulting time domain signal at step 26 so that the effect of the noise on the extraction of the estimated channel information from the pilot signals P(k) can be reduced. Subsequently the windowed time domain signal is converted to the estimated channel information at step 28 by means of a Fourier transformation (FFT). As explained above the estimated channel information $H_e(k)$ is then used to adjust demodulation of the received OFDM symbols of the current transmission.

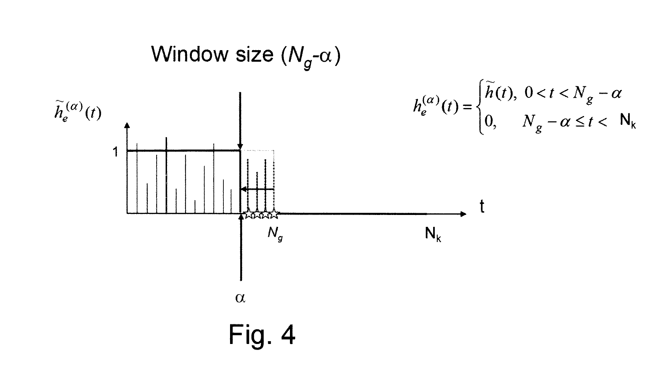

The channel estimator 20 of each receiver 2A, 2B will subsequently, after performing this channel estimation with a window size equal to the guard interval length Ng, resulting in said estimated channel information He(k), repeat this channel estimation a plurality of times with a modified window size. As shown in Figure 4 if the window size can be reduced such that it is equal to the guard interval length Ng minus an integer filtering parameter $\alpha$, then the negative noise effect on the channel estimation can be reduced leading to a reduction in the BER and of course also leading to an increased throughput if an adapted guard interval length Ng' could be used for future transmissions. In order to enable such a reduction this filtering parameter $\alpha$ is an integer in the range from 1 to Ng - 1. For each of these filtering parameter $\alpha$ values a respective further estimated channel information $H_e^{(\alpha)}(k)$ is calculated as shown in the method of operation 200 of Figure 5 during an additional iterative step 30 comprising a search algorithm. Subsequently for each of said further channel estimations $H_e^{(\alpha)}(k)$ this search algorithm calculates an estimator $MSE(\alpha) = \sum_{k=0}^{Nk-1}\left|H_e^{(\alpha)}(k) - H_e(k)\right|$ and based on a ratio $B(\alpha) = \left|\frac{MSE(\alpha+1)}{MSE(\alpha)}\right|$ an optimal $\alpha = \underset{\alpha}{\mathrm{argmax}}\{B(\alpha)\}$ can then be calculated finally allowing the calculation of an adapted guard interval length Ng' = Ng - optimal $\alpha$.

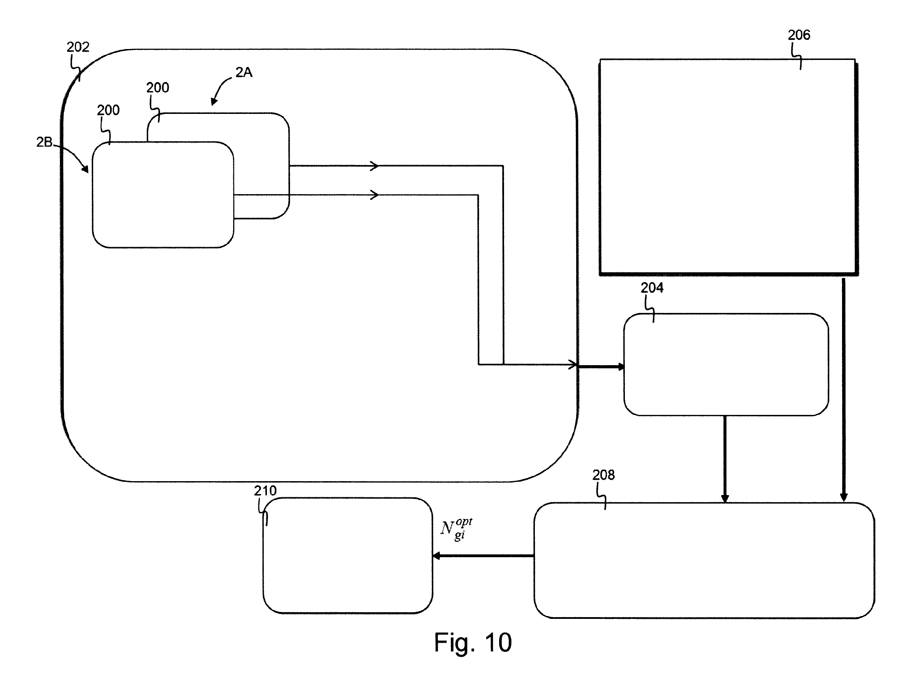

As schematically shown in Figure 6 the search algorithm can be executed by a control system 4 which is connected to the respective channel estimators 20 of the plurality of OFDM receivers 2A, 2B that receive a multicast or broadcast OFDM transmission from an OFDM transmitter 1 through a multipath channel 3. After determining the optimal $\alpha$ for each of the receivers 2A, 2B from applying the search algorithm on the current transmission, the control system 4 is able to calculate an adapted guard interval length Ng' that would be optimal for each of the receivers 2A, 2B when used as the guard interval length during future transmissions. It is clear that in this way, for each of the receivers 2A, 2B for which the method of operation 200 has been performed this will result in a corresponding plurality of respective values for an adapted guard interval length Ng' that are available to the control system 4. This is schematically shown as step 202 of the method of operation as shown in Figure 10. In a subsequent step 208 of this method the control system 4 then calculates an adapted group guard interval length $N_g^{opt}$ by means of a selection function in function of the plurality of respectively calculated adapted guard interval lengths Ng' for each of the plurality of receivers 2A, 2B.

In a final step 210 of the method of operation said adapted group guard interval length $N_g^{opt}$ is provided by the control system 4 to the OFDM transmitter 1 and the plurality of OFDM receivers 2A, 2B so that they are subsequently able to adapt their guard interval length Ng for future transmissions to this adapted group guard interval length $N_g^{opt}$. This means that during the next transmission cycle this adapted group guard interval length $N_g^{opt}$ will then be used by the transmitter 1 during insertion of the guard interval at step 16 and the plurality of receivers 2A, 2B during the guard interval removal and channel estimation.

According to the specific embodiment shown in Figure 10 the selection function calculates said adapted group guard interval length $N_g^{opt}$ in function of a plurality of priority values S associated with each OFDM receiver 2A, 2B provided at step 206. The communication service related to the multicast or broadcast signal for the plurality of receivers 2A, 2B are prioritized for each of the transmitter 1 - receiver 2A, 2B links. This means, in that for a specific multicast or broadcast transmission from a specific transmitter 1, each of the priority values S can be linked to a corresponding receiver 2A, 2B and optionally its corresponding adapted guard interval length Ng' as calculated in step 202, for example by means of a lookup table. According to a particular example the priority value could be a function of the required data rate of each OFDM receiver 2A, 2B. When for example the required data rate for OFDM receiver 2A running a video broadcast network service is higher than the required data rate for OFDM receiver 2B running an email network service, a higher priority value for the OFDM receiver 2A will make sure that the selection function attaches a higher weight to the calculated adapted guard interval length Ng' of this OFDM receiver 2A during the calculation of the adapted group guard interval length $N_g^{opt}$. It is clear that alternative rules for prioritizing by means of the priority value S associated with the respective OFDM receivers 2A, 2B of a multicast or broadcast communication are possible.

As further shown in the specific embodiment of Figure 10, next to the priority values S, the selection function calculates the adapted group guard interval length $N_g^{opt}$ in function of error probabilities Pe associated with each of the respective OFDM receiver 2A, 2B such that in this calculation the allowed network service quality degradation can be taken into account. The signal quality requirements for a High Definition Television or HDTV signal for example are higher than those for a signal for transmitting email. As shown in Figure 10, according to this specific embodiment the error probability Pe associated with a specific OFDM receiver 2A, 2B can be calculated in function of their respectively calculated adapted guard interval length Ng' at step 202. This is made possible by means of the teachings of "J. Proakis, Digital Communications, 4th edition, McGraw Hill, 2001 ". When assuming that the signal path between the transmitter 1 and a receiver 2A, 2B comprises a number of reflections, the ideal case of error probability Pe for Quadrature phase-shift keying or QPSK modulation can be represented as a function of:

$$\frac{1}{2}\left(\frac{1}{\sqrt{2\left(\frac{1+\alpha_c^{-(l_m+1)}}{1+\alpha_c^{-L}}\right)^{-1}\left(1+\frac{SNR^{-1}}{2}\right)\left[1+\left(\frac{1+\alpha_c^{-(l_m+1)}}{1+\alpha_c^{-L}}\right)^{-1}\frac{SNR^{-1}}{2}\frac{X}{N_k}\right]}-1}\right)$$

in which:

- X = Ng' for the specific OFDM receiver 2A, 2B as determined in step 202;
- SNR is the Signal to Noise Ration of the signal path between the specific OFDM receiver 2A, 2B and OFDM transmitter 1;
- $N_k$ is the number of subcarriers in the OFDM signal as explained above;

- $l_m = \arg\max_l \{\tau_l < N_g\}$ where $\tau_l$ is the l-th reflection between the specific OFDM receiver 2A, 2B and OFDM transmitter 1; and

- it is assumed that $E[|h_l|^2] = \dfrac{1+\alpha_c}{1+\alpha_c^{-L}} \alpha_c^{-l}$ where $E[|h_l|^2]$ is the expectation of channel gains,

- L is the maximum channel delay and
- $\alpha_c$ is the channel decay coefficient.

According to a preferred embodiment, this error probability Pe associated with a particular receiver 2A, 2B can be calculated in function of a simplified formula, when considering that SNR is usually much larger than 1 (SNR>>1) so the error probability Pe can be approximated as:

$$\frac{1}{2}\left( \frac{1}{\sqrt{2\left(\frac{1+\alpha_c^{-(l_m+1)}}{1+\alpha_c^{-L}}\right)^{-1}\left[1+\left(\frac{1+\alpha_c^{-(l_m+1)}}{1+\alpha_c^{-L}}\right)^{-1}\dfrac{SNR^{-1}}{2}\dfrac{X}{N_k}\right]} - 1} \right)$$

Calculation can still further be simplified, when calculating the error probability under the assumption that the SNR is sufficiently large to approach infinity. The error probability Pe is then determined by its upper bound and can be calculated in function of:

$$\frac{1}{2}\left( \frac{1}{\sqrt{2\left(\dfrac{1+\alpha_c^{-(l_m+1)}}{1+\alpha_c^{-L}}\right)^{-1}} - 1} \right)$$

These calculated error probabilities Pe for each of the OFDM receivers 2A, 2B taking part in a multicast or broadcast communication with the OFDM transmitter 1 can optionally be added to the lookup table mentioned above also comprising the priority values S linked to each corresponding receiver 2A, 2B and its corresponding adapted guard interval length Ng' as calculated at step 202.

The calculation of the adapted group guard interval length $N_g^{opt}$ at step 208 of the particular embodiment shown in Figure 10, in such way that an unallowable degradation of the quality level for the network services running at the respective receivers 2A, 2B is avoided, is based on the following criteria:

calculate $N_g^{opt} = \min\{(P_e(based\ on\ N_g^{conv}), P_e(based\ on\ N'_g\ of\ \mathrm{Re}ceiver\ 2A))\,|\,S\ of\ \mathrm{Re}ceiver\ 2A\}$

with regard to Receiver 2A

in which $N_g^{conv}$ is a conventional guard interval length that would be used in a conventional system making use of a pre-defined guard interval length that is determined in function of the standard being used for the transmission as explained above. In this way the formula generally calculates take the optimum value of guard interval length such that equals to the guard interval length selected as the minimum value of the corresponding calculated Pe for the conventional guard interval length $N_g^{conv}$ or for the calculated adapted guard interval length Ng', with respect to desired priority value S of the corresponding network communication service. This way of calculating avoids the effect that occurs when the calculated adapted group guard interval length $N_g^{opt}$ is selected as the minimum value among all calculated adapted guard interval lengths Ng' at step 202. In such a case the selected $N_g^{opt}$ will provide a suboptimum solution as in this case for all of the receivers 2A, 2B except the one associated with the maximum value for its Ng', the adapted guard interval length may be longer or shorter than the actual channel delay spread. This would lead to the risk of introducing a larger power loss or increasing the noise level. Such a larger power loss may cause a slight error performance degradation, however an increase in the noise level may have a more severe effect on the error performance should be avoided.

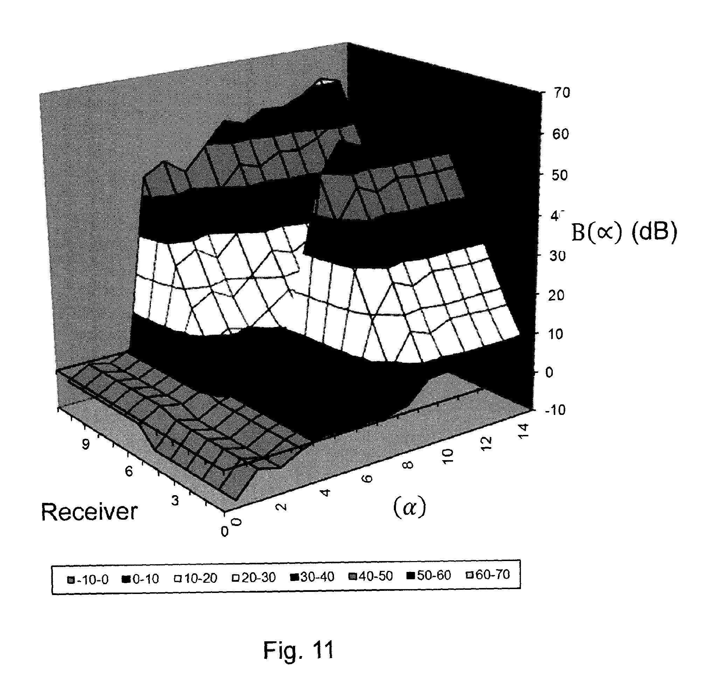

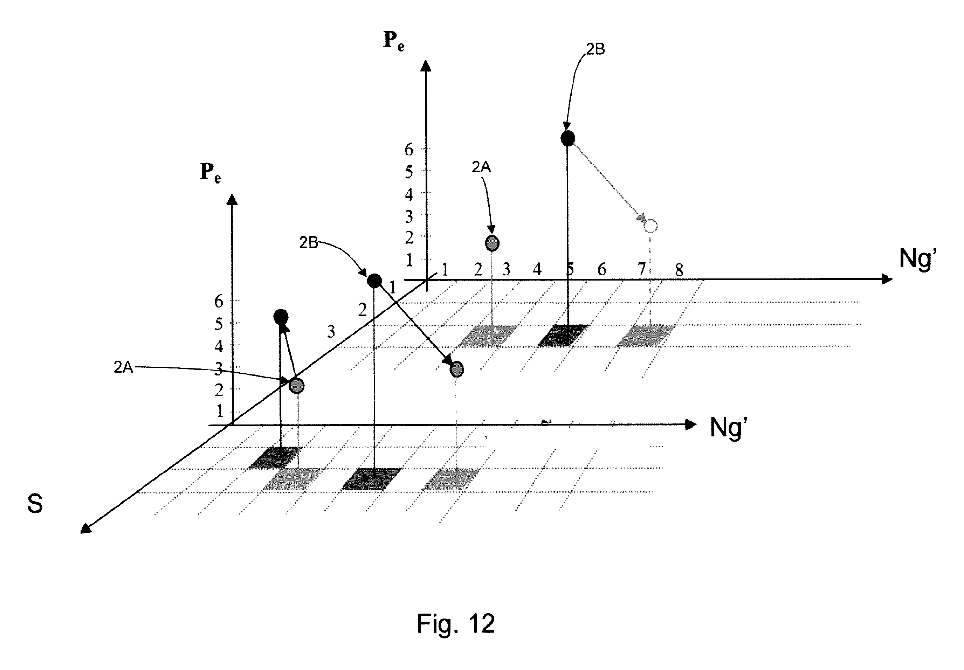

The calculation of the adapted group guard interval length $N_g^{opt}$ as explained above with reference to the embodiment of Figure 11 can be seen as multi-dimensional optimization problem, which takes into consideration these parameters: the priority value S associated with each receiver 2A, 2B, for example to take into account required data transmission rates and the error probability Pe as calculated in function of the adapted guard interval length Ng' associated with each receiver 2A, 2B. This generally means all the values provided in the lookup table as described above. A simplified graphical illustration of the calculation is given in Figure 12. The position of the dots represents the state of a specific receiver 2A, 2B in function of the parameters comprising the priority value S, the error probability Pe and the adapted guard interval length Ng' associated with each receiver 2A, 2B as explained above. This particular example comprising a first receiver 2A and a second receiver 2B taking part in a multicast or broadcast communication with a transmitter 1 comprising a current group guard interval length Ng with a value of 8. For the second receiver 2B the Channel Impulse Response changes from a value of 6 to 12 during a multicast or broadcast communication relates to an adapted guard interval length Ng' with a value of 6. As can be seen in Figure 12 in this initial situation the parameters for the second receiver 2B are a priority value S of 3 and an error probability Pe with a value of six. The first receiver 2A that is also involved in the multicast or broadcast communication comprises associated parameters that are a priority value S of 3 and an error probability Pe with a value of 3. Based on the calculations at step 202, the adapted guard interval Ng' for adapting to the abovementioned change in the Channel Impulse Response for the first receiver is calculated to be a value Ng'=2 and for the second receiver 2B to be a value Ng'=8. Based on these values of Ng' for both receivers 2A, 2B at step 204 corresponding error probabilities Pe can be calculated. As shown the Pe for the first receiver 2A changes from a value of 3 to 5 and that of the second receiver 2B changes from a value of 6 to 3. When additionally taking into consideration also the priority values S for both receivers 2A, 2B as a parameter in the calculation of the adapted group guard interval length $N_g^{opt}$ at step 208 as explained above the control system 4 for example determines it to have a value of 12. It is clear that although the graphical representation shown in Figure 12is shown to be a three dimensional solution space, alternative embodiments are possible in which the calculation of the adapted group guard interval length $N_g^{opt}$ takes into account alternative or additional suitable parameters so that the calculation can be seen as a multi-dimensional optimization problem depending on the requirements for the parameter in use.

In this way it is also possible to cope with varying channel conditions in a multi-cast or broadcast context in an improved and efficient way that will not only allow an improvement in throughput of about 5%-6%, but also an improved BER because of a better rejection of noise during channel estimation as the size of the windowing function is better adapted to the number of multi-paths in the channel.

In order to also cope with a channel changes that deteriorate the channel multi-path situation and require an increase in the guard interval length the filtering parameter α can additionally an integer in the range from -1 to -(Ng-1).

According to still further alternative embodiments still other ranges for the filtering parameter α can be provided, which not necessarily need to be integer ranges, but could equally be for example a range comprising a plurality of real values. In general the filtering parameter α is to be selected from a plurality of values in the range from -Ng to Ng, so that it results in a corresponding plurality of non-zero window sizes for performing the repeated channel estimations according to the method of the invention. It is further clear that also the step in between two consecutive values for the filtering parameter α in this range must not be 1 as in the examples described above, any other suitable integer or non-integer value could alternatively be chosen as the step between two consecutive values for the filtering parameter α.

Figure 7 illustrates the calculation of the ratio $B(\propto) = \left|\frac{MSE(\propto+1)}{MSE(\propto)}\right|$ during the search algorithm for several values of signal to noise energy ratio (Eb/N0). In this particular example it can clearly be seen that the optimal $\propto = \underset{\sim}{\mathrm{argmax}}\{B(\propto)\}$ will be $\propto = 8$.

Figure 11 similarly illustrates the same calculation or the ration $B(\propto) = \left|\frac{MSE(\propto+1)}{MSE(\propto)}\right|$ in a multicast or broadcast context comprising 10 receivers 2A, 2B taking part in a multicast or broadcast communication. In this example it can clearly be seen that for the respective receivers labelled 1-5 the optimal $\propto = \underset{\propto}{\mathrm{argmax}}\{B(\propto)\}$ will be $\propto = 8$; while for the receivers labeled 6-10 the optimal $\propto = \underset{\propto}{\mathrm{argmax}}\{B(\propto)\}$ will be $\propto = 4$.

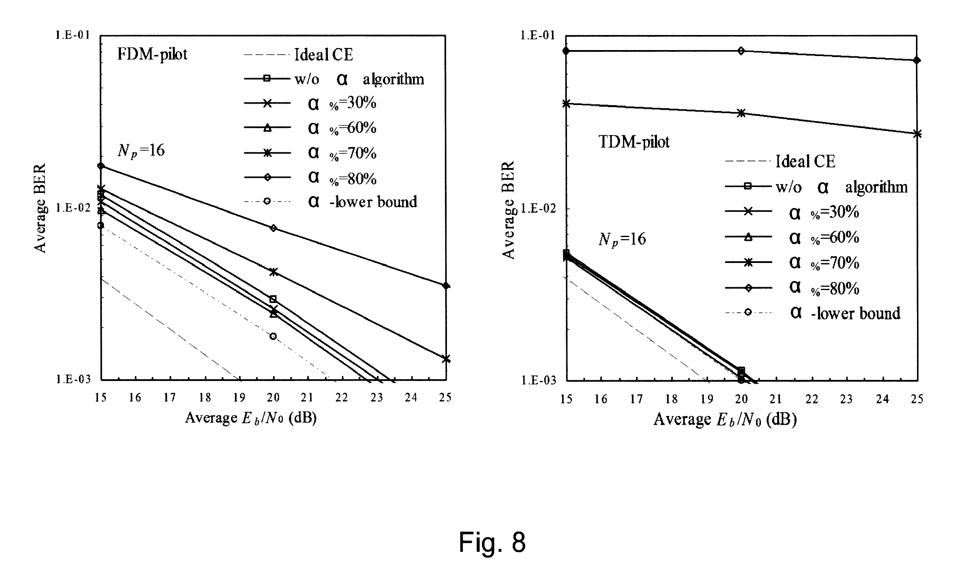

The BER performance using the method according to the invention with both FDM-pilot and TDM-pilot are illustrated in Figure 8. It can be seen that the BER performance is improved until α-lower bound. The lower bound of BER is obtained for and α that equals the number of multi-paths. However in order to cope with accumulation of errors in the calculations due to channel noise optimal $\propto$ could alternatively be reduced by multiplication with a certain percentage. In that case optimal $\propto = \left\lfloor \underset{\propto}{\mathrm{argmax}}\{B(\propto)\}.\frac{\propto\%}{100}\right\rfloor$, in which $\propto$ % ranges from 0 to 100. In the case of TDM-pilot the BER performance is improved for about 1 dB with respect to FDM pilots.

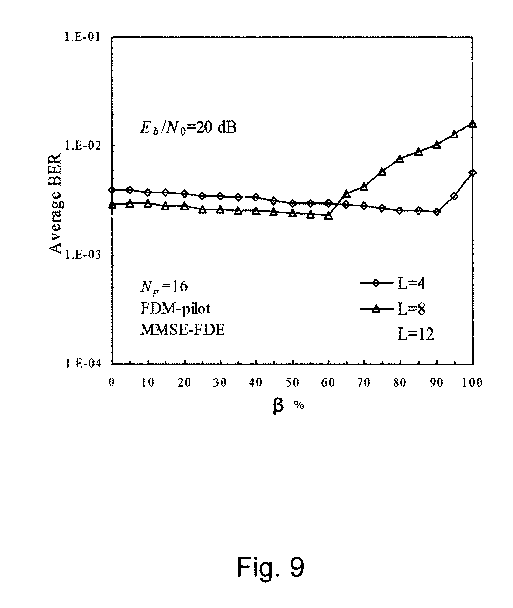

Figure 9 shows the BER performance with varying numbers of channel paths L. It further validates the previous results and clarifies the dependence of optimal α on the number of channel paths L.

Although in the embodiments above the estimator $MSE(\alpha)$ has been calculated as $MSE(\alpha) = \sum_{k=0}^{Nk-1}\left|H_e^{(\propto)}(k) - H_e(k)\right|$, it is clear that according to alternative embodiments this estimator $MSE(\alpha)$ can be calculated in alternative ways. In general any calculation will enable an suitable estimator $MSE(\alpha)$ it it quantifies the difference between the estimated channel information $H_e(k)$ with a window size equal to the guard interval length Ng, and the estimated channel information $H_e^{(\propto)}(k)$ with the non-zero window size equal to the guard interval length Ng minus the filtering parameter α. It is also clear that any other suitable means square error function then the one displayed in the embodiments described above will enable an alternative embodiment according to the invention.

It is also not required to calculate the ratio B($\propto$) as in the example above as ratio $B(\propto) = \left|\frac{MSE(\propto+1)}{MSE(\propto)}\right|$. In general it suffices to calculate a ratio B($\propto$) between an estimator MSE(α) for a filtering parameter α of a current channel estimation and an estimator of another of the plurality of channel estimations. However calculation of the optimal $\propto$ can be performed efficiently if that other channel estimation is one of the plurality of channel estimations of which the filtering parameter α is a higher step value of the range of the plurality of values for the plurality of filtering parameters α . This means a higher step value of the range with respect to the filtering parameter α of the current channel estimation.

According to still further embodiments it is also not required to calculate optimal $\propto$ in function of $\underset{\propto}{\mathrm{argmax}}\{B(\propto)\}$ as in general it will suffice to calculate an optimal $\propto$in function of a filtering parameter α for which the ratio $B(\propto)$ reaches an extremum, which, depending on the ration used could be for example a maximum or minimum of this ratio $B(\propto)$.

Although the embodiments described above refer to an OFDM communication scheme, the method according to the invention is equally applicable to any other similar scheme that makes use of a Guard Interval, such as for example block processing schemes, comprising any multicarrier or single carrier scheme with GI.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

**Claims**

1. A method of operating an OFDM transmitter (1) configured to transmit an OFDM signal comprising at least Nk subcarriers comprising pilot signals P(k) to a plurality of connected OFDM receivers (2A, 2B), said OFDM receivers (2) and said OFDM transmitter (1) further being connected to a control system (4) configured to calculate an adapted guard interval length Ng', and

   each of said plurality of OFDM receivers (2A, 2B) comprising a Channel Estimator (20) configured to extract estimated channel information $H_e(k)$ from the pilot signals P(k) of the received OFDM signal by means of a windowing function, k being a subcarrier index and ranging from 0 to Nk-1 in integer increments,

   the method comprising the steps of, for each of said plurality of OFDM receivers (2A, 2B):

   - the Channel Estimator (20) extracting said estimated channel information He(k) by means of a windowing function with a window size equal to the guard interval length Ng,

   - the Channel Estimator (20) extracting a plurality of further estimated channel informations $H_e^{(\alpha)}(k)$ by

   repeating said windowing function a plurality of times with a non-zero window size equal to the guard interval length Ng minus a filtering parameter $\alpha$, said filtering parameter $\alpha$ being selected from a corresponding plurality of values in the range from -Ng to Ng, .

   - the control system (4) calculating for each of said plurality of further estimated channel informations $H_e^{(\alpha)}(k)$:

     - an estimator $MSE(\alpha)$ that quantifies the difference between said estimated channel information $H_e(k)$ with a window size equal to said guard interval length Ng, and said further estimated channel information

     $H_e^{(\alpha)}(k)$ with said non-zero window size equal to said guard interval length Ng minus said filtering parameter $\alpha$.

     - a ratio $B(\alpha)$ between a current estimator $MSE(\alpha)$ for said filtering parameter $\alpha$ of the corresponding further estimated channel information $H_e^{(\alpha)}(k)$ and a next estimator of another of said plurality of further estimated channel informations;

     - an optimal $\alpha$ in function of said filtering parameter $\alpha$ for which said ratio $B(\alpha)$ reaches an extremum;
     - an adapted guard interval length Ng' = Ng - optimal $\alpha$;

   - the control system (4) providing a plurality of respectively calculated adapted guard interval length Ng' for each of the plurality of OFDM receivers (2A, 2B);

   - the control system (4) calculating an adapted group guard interval length $N_g^{opt}$ by means of a selection function in function of the plurality of respectively calculated adapted guard interval length Ng'.

2. A method according to claim 1, **characterised in that** the control system (4) calculates an adapted group guard interval length $N_g^{opt}$ by means of said selection function which selects said adapted group guard interval length

$N_g^{opt}$ in function of a plurality of priority values S associated with each OFDM receiver (2A, 2B).

3. A method according to claim 2, **characterised in that** the control system (4) calculates the plurality of priority values in function of the required data rate of each OFDM receiver (2A, 2B)

4. A method according to any of the preceding claims, **characterised in that** the control system (4) calculates an adapted group guard interval length $N_g^{opt}$ by means of said selection function which calculates said adapted group guard interval length $N_g^{opt}$ in function of error probabilities Pe associated with each OFDM receiver (2A, 2B).

5. A method according to claim 4, **characterised in that** the control system (4) calculates said error probability Pe associated with an OFDM receiver (2A, 2B) in function of their respectively calculated adapted guard interval length Ng'.

6. A method according to claim 5, **characterised in that** the control system (4) calculates said error probability Pe associated with an OFDM receiver (2A, 2B) in function of

$$\frac{1}{2}\left(\frac{1}{\sqrt{2\left(\frac{1+\alpha_c^{-(l_m+1)}}{1+\alpha_c^{-L}}\right)^{-1}\left(1+\frac{SNR^{-1}}{2}\right)\left[1+\left(\frac{1+\alpha_c^{-(l_m+1)}}{1+\alpha_c^{-L}}\right)^{-1}\frac{SNR^{-1}}{2}\frac{X}{N_k}\right]}}-1\right)$$

in which:

• X = Ng' ;
• SNR is the Signal to Noise Ration of the signal path between the specific OFDM receiver 2A, 2B and OFDM transmitter 1;

• $l_m = \arg\max_l\{\tau_l < N_g\}$ where $\tau_l$ is the l-th reflection between the OFDM receiver (2A, 2B) and OFDM transmitter (1); and

• it is assumed that $E[|h_l|^2] = \frac{1+\alpha_c}{1+\alpha_c^{-L}}\alpha_c^{-l}$ where $E[|h_l|^2]$ is the expectation of channel gains,

• L is the maximum channel delay and
• $\alpha_c$ is the channel decay coefficient.

7. A method according to any of the preceding claims, **characterised in that** said filtering parameter $\alpha$ is an integer in the range from -(Ng-1) to (Ng-1), optionally in the range from 0 to Ng-1.

8. A method according to any of the preceding claims, **characterised in that** the control system (4) calculates said estimator $MSE(\alpha)$ such that it quantifies said difference by means of a mean square error calculation.

9. A method according to any of the preceding claims, **characterised in that** the control system (4) calculates said another of said plurality of further estimated channel informations of said next estimator; such that it is one of which the filtering parameter $\alpha$ is a higher step value of said range of said plurality of values for said plurality of filtering parameters $\alpha$ with respect to the filtering parameter $\alpha$ of the current estimator.

10. A method according to any of the preceding claims, **characterised in that** said control system (4) calculates said

optimal $\propto$ in function of $\underset{\propto}{\mathrm{argmax}}\{B(\propto)\}.$

**11.** A method according to any of the preceding claims, wherein said control system (4) provides said adapted group guard interval length $N_g^{opt}$ to said OFDM transmitter (1) and said plurality of OFDM receivers (2), .and in that said OFDM transmitter (1) and said plurality of OFDM receiver (2) adapt said guard interval length Ng for future transmissions to said adapted group guard interval length $N_g^{opt}$.

**12.** A control system (4) configured to perform the method according to any of the preceding claims.

**13.** An OFDM receiver (2) configured to perform the method according any of the claims 1 to 11.

**14.** An OFDM transmitter (1) configured to perform the method according to any of the claims 1 to 11.

**15.** A computer program product adapted to perform the method according to any of the claims 1 to 11.

Fig. 1B

Fig. 1A

15

Np    Np
time

frequency

Fig. 2A

Np

Np

time

frequency

Fig. 2B

20

$$X = \begin{cases} N_k, \text{TDM - pilot} \\ N_g, \text{FDM} - \text{pilot} \end{cases}$$

$$Y_e(k) = P(k)H(k) + N(k)$$

```
          22              24        h̃(t)  26          h_e(t)  28        H_e(k)
   ┌──────────────┐   ┌──────────┐      ┌──────────────┐   ┌──────────┐
───┤   Reverse    ├─●─┤   (X)    ├──────┤  Windowing   ├───┤  (N_k)   ├───►
   │    mod.      │   │   IFFT   │      │              │   │   FFT    │
   └──────────────┘   └──────────┘      └──────────────┘   └──────────┘
P(k) ──────►
```

$$\widetilde{H}(k) = \frac{Y_e(k)}{P(k)} = H(k) + \widetilde{N}(k)$$

$$h_e(t) = \begin{cases} \widetilde{h}(t), \ 0 < t < N_g \\ 0, \quad N_g \leq t < N_k \end{cases}$$

$$\widetilde{h}(t) = h(t) + \widetilde{n}(t)$$

Fig. 3

Window size ($N_g - \alpha$)

$\widetilde{h}_e^{(\alpha)}(t)$

$$h_e^{(\alpha)}(t) = \begin{cases} \widetilde{h}(t), & 0 < t < N_g - \alpha \\ 0, & N_g - \alpha \leq t < N_k \end{cases}$$

1

$N_g$

$N_k$

t

$\alpha$

Fig. 4

EP 2 809 039 A1

Fig. 5

Fig. 6

Fig. 7

Fig. 8

Fig. 9

EP 2 809 039 A1

206

204

208

202

200

200

2A

2B

210

$N_{gi}^{opt}$

Fig. 10

Fig. 11

Fig. 12

Europäisches
Patentamt

European
Patent Office

Office européen
des brevets

# EUROPEAN SEARCH REPORT

Application Number

EP 13 29 0117

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | HARIS GACANIN: "Joint iterative channel estimation and guard interval selection for adaptive powerline communication systems", POWER LINE COMMUNICATIONS AND ITS APPLICATIONS (ISPLC), 2013 17TH IEEE INTERNATIONAL SYMPOSIUM ON, IEEE, 24 March 2013 (2013-03-24), pages 197-202, XP032420391, DOI: 10.1109/ISPLC.2013.6525849 ISBN: 978-1-4673-6014-2 * the whole document * | 1-15 | INV. H04L25/02 H04L25/03 H04L27/26 |
| A | RAMADAN ALI A ET AL: "Adaptive guard interval length for OFDM-based WLAN systems in frequency selective channels", WIRELESS TECHNOLOGY, 2008. EUWIT 2008. EUROPEAN CONFERENCE ON, IEEE, PISCATAWAY, NJ, USA, 27 October 2008 (2008-10-27), pages 115-118, XP031408487, ISBN: 978-2-87487-008-8 * section II, III * | 1-15 | |
| | | | TECHNICAL FIELDS SEARCHED (IPC) |
| A | EP 1 531 593 A2 (NTT DOCOMO INC [JP]) 18 May 2005 (2005-05-18) * paragraph [0022] - paragraph [0031] * * figures 4-6 * | 1-15 | H04L |

-/--

The present search report has been drawn up for all claims

| Place of search | Date of completion of the search | Examiner |
|---|---|---|
| Munich | 14 November 2013 | Ferrari, Jeannot |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | NGUYEN-DUC QUANG ET AL: "An Optimal Algorithm of Estimation Channel Combining Kalman Filter with Adaptive Guard Interval for Mobile WiMAX Standard", COMPUTING AND COMMUNICATION TECHNOLOGIES, RESEARCH, INNOVATION, AND VISION FOR THE FUTURE (RIVF), 2012 IEEE RIVF INTERNATIONAL CONFERENCE ON, IEEE, 27 February 2012 (2012-02-27), pages 1-4, XP032138223, DOI: 10.1109/RIVF.2012.6169848 ISBN: 978-1-4673-0307-1 * section IV * | 1-15 | |
| A | SHIGANG TANG ET AL: "Channel estimation for cyclic postfixed OFDM", COMMUNICATIONS, CIRCUITS AND SYSTEMS, 2008. ICCCAS 2008. INTERNATIONAL CONFERENCE ON, IEEE, PISCATAWAY, NJ, USA, 25 May 2008 (2008-05-25), pages 246-249, XP031352919, DOI: 10.1109/ICCCAS.2008.4657769 ISBN: 978-1-4244-2063-6 * section II, III * | 1-15 | TECHNICAL FIELDS SEARCHED (IPC) |
| A | DONG-HYUN KANG ET AL: "A practical noise mitigation scheme for DVB-T/H system using delay spread estimation", IEEE TRANSACTIONS ON CONSUMER ELECTRONICS, IEEE SERVICE CENTER, NEW YORK, NY, US, vol. 53, no. 1, 1 February 2010 (2010-02-01), pages 9-17, XP011306106, ISSN: 0098-3063 * section III * | 1-15 | |

The present search report has been drawn up for all claims

| Place of search | Date of completion of the search | Examiner |
|---|---|---|
| Munich | 14 November 2013 | Ferrari, Jeannot |

EPO FORM 1503 03.82 (P04C01)

**ANNEX TO THE EUROPEAN SEARCH REPORT
ON EUROPEAN PATENT APPLICATION NO.**                    EP 13 29 0117

This annex lists the patent family members relating to the patent documents cited in the above-mentioned European search report.
The members are as contained in the European Patent Office EDP file on
The European Patent Office is in no way liable for these particulars which are merely given for the purpose of information.

14-11-2013

| Patent document cited in search report | | Publication date | Patent family member(s) | | Publication date |
|---|---|---|---|---|---|
| EP 1531593 | A2 | 18-05-2005 | CN | 1617533 A | 18-05-2005 |
| | | | EP | 1531593 A2 | 18-05-2005 |
| | | | EP | 2109274 A1 | 14-10-2009 |
| | | | JP | 4291674 B2 | 08-07-2009 |
| | | | JP | 2005150850 A | 09-06-2005 |
| | | | US | 2005099936 A1 | 12-05-2005 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 12290336 A

**Non-patent literature cited in the description**

- **ZHANG ZHAO-YANG ; LAI LI-FENG.** A novel OFDM transmission scheme with length-adaptive Cyclic Prefix. *Journal of Zhejiang University SCIENCE,* 2003